Europäisches Patentamt

European Patent Office

Office européen des brevets

(11) Veröffentlichungsnummer: **0 313 004**
**A2**

(12) **·EUROPÄISCHE PATENTANMELDUNG**

(21) Anmeldenummer: 88117366.0

(22) Anmeldetag: 19.10.88

(51) Int. Cl.⁴: **A01K 93/00**

(30) Priorität: **19.10.87 DE 8713998 U**

(43) Veröffentlichungstag der Anmeldung:
**26.04.89 Patentblatt 89/17**

(84) Benannte Vertragsstaaten:
**AT CH LI NL**

(71) Anmelder: **Lingen, Karl-Heinz**
**Breitestrasse 120**
**D-4040 Neuss(DE)**

(72) Erfinder: **Albrecht, Joachim**
**Lacombletstrasse 36**
**D-4000 Düsseldorf 1(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) ·Wurfschwimmer.

(57) Der Querschnitt einer Angelschnurinnenführung (3) eines Wurfschwimmers (1) entspricht auf der gesamten Länge zumindest dem Querschnitt des Senkbleis (6), das sich einschließlich des Wirbels (12) und eines Teils des Vorfaches (13) in die Innenführung (3) hineinziehen läßt und somit ein Verknoten von Angelschnur (5), Senkblei (6), Wirbel (12), Vorfach (8) und Haken (9), beispielsweise beim Werfen des Schwimmers (1) verhindert.

EP 0 313 004 A2

## Wurfschwimmer

Die Erfindung betrifft einen Wurfschwimmer, in länglicheren Ausführungen auch als Posen bezeichnet, mit einer Schnurinnenführung.

Das Angeln mit Wurfschwimmern ist sehr beliebt, da mit deren Hilfe der Angelhaken auch in einer größeren Entfernung vom Ufer ausgelegt werden kann. Von Sportanglern werden solche Schwimmer in Verbindung mit einer über eine Angelrute laufenden Angelschnur, die über die Innenführung des Schwimmers mit einem Senkblei, an das über einen Wirbel das Vorfach mit dem Angelhaken befestigt ist, verwendet. Das angelschnurseitig an dem Vorfach befestigte, den am anderen Ende des Vorfaches angeordneten Haken in die Tiefe ziehende Senkblei, sollte von dem Haken einen möglichst grossen Abstand besitzen, da die Fische sonst auf Kosten des Fangerfolgs durch das in der Nähe befindliche Senkblei erschreckt werden.

Ein solcher Schwimmer wird in der Regel mit Hilfe der Angelrute oder ganz einfach mit der Hand ausgeworfen, wobei die auf einer auf der Angelrute befindlichen Wurfrolle aufgewickelte Angelschnur sich selbständig abwickelt. Beim Auftreffen des Schwimmers auf die Wasseroberfläche sinkt das Senkblei mit dem über den Wirbel und das Vorfach verbundenen Angelhaken ab. Die Angeltiefe wird üblicherweise mit einem im Abstand vom Schwimmer befindlichen nicht durch die Angelschnurinnenführung passenden Knoten in der Angelschnur eingestellt. Normalerweise besitzt ein solcher Schwimmer an seiner unter Wasser befindlichen Stirnseite ein Gewicht, das den Schwimmer während des Angelns aufrecht stellt. Bei herkömmlichen Schwimmern befinden sich in situ das Senkblei, der Wirbel und das Vorfach stets außerhalb und unterhalb der unteren Stirnfläche des Schwimmers. Der Durchmesser der Angelschnurinnenführung ist kleiner als die kleinste Projektionsfläche des Senkbleis, so daß sich diese nicht in die Angelschnurinnenführung ziehen läßt.

Während des Auswerfens solcher Schwimmer besteht die Gefahr, daß sich das an dem Senkblei uber den Wirbel befestigte Vorfach mit seinem Angelhaken mit der Angelschnur verwickelt, was äußerst lästig ist, die Angelschnur zerstören und den Verlust des Köders bedeuten kann. Des weiteren muß nach dem Tierschutzgesetz ein am Angelhaken hängender Fisch während des Herausziehens aus dem Wasser mit einem Käscher unterfangen werden, so daß sein Gewicht nicht völlig am Angelhaken hängt. Auch hierbei kommt es häufig zu den beschriebenen Verknotungen von Angelhaken, Schnur, Vorfach und Wirbel. Daher hat es nicht an Versuchen gefehlt, das Verknotungsproblem beim Auswerfen des Schwimmers unter Beibehaltung einer ausreichenden Vorfachlänge zu lösen.

Aus der europäischen Patentschrift 35 996 ist ein Wurfangelschwimmer bekannt, an dessen Angelschnurinnenführung sich eine zylindrische Kammer mit offenem Boden anschließt, die so bemessen ist, daß sie das am Senkblei befestigte Vorfach sowie den am Vorfach befestigten Haken einschließlich des Köders aufnimmt. Um in dieser kompakten Kammer eine ausreichende Vorfachlänge zu ermöglichen, hat das Senkblei die Form einer im wesentlichen zylindrischen Spule, um die das Vorfach vor und während des Wurfes aufgewickelt ist und in deren Nut das mit dem Vorfach verbundene Hakenende untergebracht ist. Somit bilden Spule, Senkblei und Haken eine kompakte Gesamtheit in der Kammer. Eine ausreichende Vorfachlänge wird so sichergestellt, ist allerdings aufgrund des Aufrollmechanismus recht aufwendig und störanfällig. Die Verknotungsgefahr ist während des Wurfes, jedoch nicht beim Unterkäschern des gefangenen Fisches gewährleistet, da sich das Vorfach nicht selbständig wieder auf das als Spule ausgebildete Senkblei aufwickelt. Insgesamt handelt es sich um eine aufwendige, recht schwierig zu handhabende, das Problem des Verknotens nur unvollständig lösende Vorrichtung, deren Herstellungskosten aufgrund der aufwendigen Konstruktion erheblich sind.

Der Erfindung liegt daher die Aufgabe zugrunde, einen konstruktiv einfachen und somit kostengünstigen, ein Verknoten von Angelhaken, Vorfach, Wirbel, Senkblei und Angelschnur sicher verhindernden Wurfschwimmer zu schaffen.

Diese Aufgabe wird dadurch gelöst, daß ein Wurfschwimmer der eingangs erwähnten Art erfindungsgemäß eine Angelschnurinnenführung mit einem dem Senkblei zumindest entsprechenden Querschnitt auf ihrer gesamten Länge aufweist. So läßt sich das Senkblei, der Wirbel einschließlich eines beträchtlichen Teils des Vorfaches vor Abwurf des Schwimmers so weit in den Schwimmer hineinziehen, bis das Senkblei an einen Anschlag bzw. eine angelschnurseitige Verkleinerung des Querschnitts stößt, die vorzugsweise als ein auf der Angelschnurinnenführung sitzender Stopfen mit einer kleineren Durchtrittsöffnung als die Querschnittsfläche der Angelschnurinnenführung ausgebildet ist. In dieser Position des Senkbleis befindet sich bereits ein beträchtlicher Teil des Vorfaches in dem Schwimmer, und ein weiterer, der Gesamtlänge des Schwimmers abzüglich der Hakenlänge entsprechender Teil des Vorfaches liegt außerhalb der Angelschnurinnenführung, ohne daß eine Berührung zwischen Angelhaken und Angelschnur möglich wäre.

Beim Abwerfen des Schwimmers bleibt das Senkblei aufgrund seiner Massenträgheit an dem die Querschnittsfläche verkleinernden Stopfen anliegen, gleitet beim Auftreffen des Schwimmkörpers auf die Wasseroberfläche durch das in Wurfrichtung offene Ende der Innenführung und zieht dabei das außerhalb des Schwimmers liegende Ende des Vorfaches einschließlich des Angelhakens mit unter die Wasseroberfläche. Beim Aufwickeln der Angelschnur wird das Senkblei wieder bis an den in der Innenführung liegenden Stopfen hineingezogen, während ein Teil des Vorfaches einschließlich des Hakens außerhalb des Schwimmers verbleibt.

Ein am Haken hängender Fisch kann nun ohne die Gefahr eines Verknotens des Vorfaches mit der Angelschnur unterkäschert und aus dem Wasser gezogen werden. Die Wurfeigenschaften des Schwimmers und auch seine aufrechte Stellung im Wasser, lassen sich mit einer am vorfachseitigen Ende des Schwimmers befestigten Ausgleichsgewicht, das vorteilhafterweise als eine abnehmbare durch einen Kunststoffsicherungsring gesicherte Hülse ausgebildet ist, erheblich verbessern; denn während der Flugphase ist der Schwimmer durch das am angelschnurseitigen Ende liegende Senkblei und durch das am vorfachseitigen Ende angeordnete Ausgleichsgewicht ausbalanciert, während dieses Gleichgewicht beim Aufprall auf die Wasseroberfläche infolge des Abgleitens des Senkbleis durch die Angelschnurinnenführung unter die Wasseroberfläche auf die Seite des Ausgleichsgewichts verschoben wird, so daß sich der Schwimmer im Wasser automatisch senkrecht aufstellt.

Das als abnehmbare Hülse ausgeführte Ausgleichsgewicht erlaubt durch den Einsatz verschieden großer Hülsen stets ein optimales Anpassen an das Gewicht des Senkbleis. Eine einfache Ausführung der Erfindung besteht aus einem im Führungsröhrchen umgebenen Schwimmkörper. Eine besonders einfache, und somit kostengünstige Version bildet Führungsröhrchen und ummantelnden Schwimmkörper einstückig aus. So kann der Schwimmer in einer Gußform, beispielsweise aus Schaumkunststoff gegossen werden.

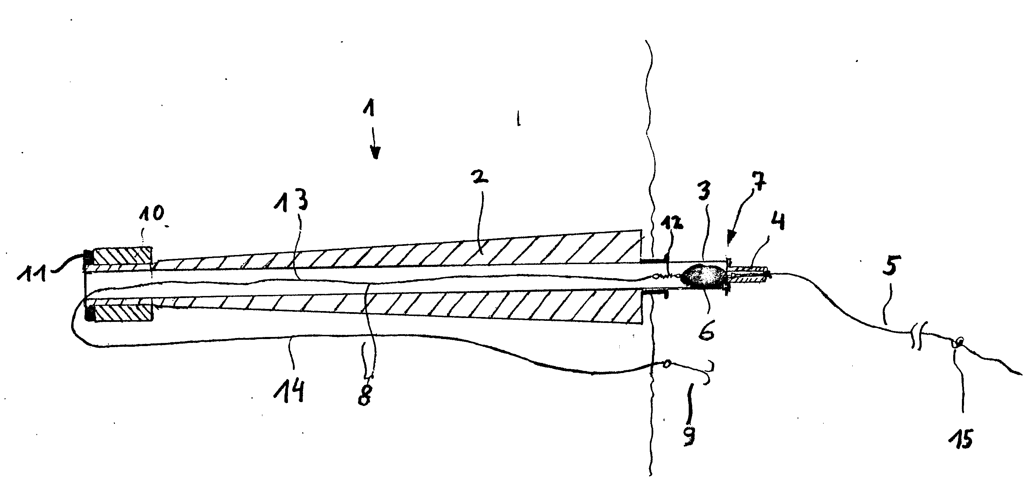

Die Erfindung wird nachfolgend anhand des in der Zeichnung als Ausführungsbeispiel dargestellten Querschnitts durch einen Wurfschwimmer des näheren erläutert.

Der Schwimmer 1 besteht im wesentlichen aus dem auf die, vorzugsweise als Führungsröhrchen ausgebildete Angelschnurinnenführung 3 aufgezogenen Schwimmkörper 2, einem angelschnurseitig in die Innenführung 3 eingesetztem Senkbleianschlagstopfen 4, der den Querschnitt der Innenführung 3 unter den Durchmesser des Senkbleis 6 verengt, und aus der vorfachseitigen, abnehmbaren Hülse 10. Die Hülse sitzt durch einen Sicherungsring 11 verschiebefest auf der Innen führung 3. Der Senkbleianschlagsstopfen 4 verhindert ein Durchrutschen des Senkbleis 6 und des Wirbels 12 durch die Angelschnurinnenführung, wenn durch Ziehen an der Angelschnur 5 der Schwimmer für den Abwurf vorbereitet wird. Dabei wird ein beträchtlicher, von der Länge des Senkbleis 6 und des Wirbels 12 abhängiger Teil des Vorfaches 8 in die Innenführung 3 gezogen, während ein außenliegender Teil des Vorfaches 14 einschließlich des Angelhakens 9 kleiner oder gleich der Gesamtlänge des Schwimmers 1 einschließlich des Senkbleianschlagstopfens 4 ist. Während des Wurfes ist ein Verschieben des Senkbleis 6 zum vorfachseitigen Ende des Schwimmers 1 aufgrund der trägen Masse des Senkbleis ausgeschlossen, so daß ein Verknoten des außen liegenden Teils des Vorfaches 14 bzw. des Angelhakens 9 mit der Angelschnur 5 unmöglich ist.

Die Wurf- und Flugeigenschaften des Schwimmers 1 können durch Austausch der abnehmbaren Hülse 10, gegen dem Gewicht des Senkbleis entsprechende Beschwerungshülsen, optimiert werden. Die abnehmbare Hülse 10 wird durch einen mit Preßpassung auf der Innenführung sitzenden, vorzugsweise aus Kunststoff bestehenden Sicherungsring 11 gegen ein Abrutschen gesichert. Der Flug des Schwimmers 1 ist beim Auftreffen des Schwimmers auf die Wasseroberfläche beendet, während sich das Senkblei 6 in Richtung der abnehmbaren Bewegungshülse 10 und darüber hinaus bewegt, bis ein in der Angelschnur 5 befindlicher Knoten 15, der die Durchtrittsöffnung des Senkbleianschlagstopfens 4 nicht passieren kann, die Abwärtsbewegung des Senkbleis begrenzt.

Nach Anbeißen eines Fisches werden die Angelschnur 5, das Senkblei 6, der Wirbel 12 und der innenliegende Teil des Vorfaches 13 wieder in die Innenführung zurückgezogen, so daß sich beim Unterkäschern des am Angelhaken 9 hängenden Fischs der außen liegende Teil des Vorfachs 14 nicht mit der Angelschnur 5 oder dem Senkblei 6 mit dem Wirbel 12 verknoten kann.

Der erfindungsgemäße Schwimmer bietet sowohl beim Auswerfen als auch beim Unterkäschern eines gefangenen Fischs während des Aufholens der Angelschnur 5 eine hohe Sicherheit gegen ein Verknoten des Vorfaches und des Angelhakens mit der Angelschnur. Des weiteren handelt es sich um ein einfach zu handhabendes, aus wenigen Bauteilen bestehendes, robustes und preisgünstig zu fertigendes Gerät.

## Ansprüche

1. Wurfschwimmer mit Angelschnurinnenführung und an der Schnur Senkblei und/oder Wirbel, dadurch gekennzeichnet, daß der Querschnitt der Innenführung (3) auf deren gesamter Länge dem Querschnitt des Senkbleis (6) und/oder des Wirbels (12) zumindest entspricht.

2. Schwimmer nach Anspruch 1, dadurch gekennzeichnet, daß der Querschnitt der Innenführung (3) sich am angelschnurseitigen Ende verjüngt.

3. Schwimmer nach Anspruch 2, dadurch gekennzeichnet, daß die Durchtrittsöffnung eines am angelschnurseitigen Ende der Innenführung angeordneten Stopfens (4) kleiner als der Querschnitt des Senkbleis (6) ist.

4. Schwimmer nach einem oder mehreren der Ansprüche 1 bis 3, gekennzeichnet durch ein am vorfachseitigen Ende des Schwimmers befindliches Ausgleichgewicht (10).

5. Schwimmer nach Anspruch 4, dadurch gekennzeichnet, daß das Ausgleichgewicht (10) eine verschiebegesicherte auf der Innenführung (3) sitzende abnehmbare Hülse (10) ist.

6. Schwimmer nach einem oder mehreren der Ansprüche I bis 5, dadurch gekennzeichnet, daß die Innenführung (3) als separates Führungsröhrchen ausgebildet ist.

7. Schwimmer nach Anspruch 6, gekennzeichnet durch einen das Führungsröhrchen (3) umgebenden Schwimmkörper (2).

8. Schwimmer nach Anspruch 7, dadurch gekennzeichnet, daß das Fuhrungsröhrchen (3) und der Schwimmkörper (2) einstückig ausgebildet sind.

9. Schwimmer nach einem oder mehreren der Ansprüche 6 bis 8, dadurch gekennzeichnet, daß das Fuhrungsröhrchen (3) an dem vorfachseitigen und/oder angelschnurseitigen Ende über den Schwimmkörper (2) hinauskragt.

10. Schwimmer nach einem oder mehreren der Ansprüche 1 bis 9, dadurch gekennzeichnet, daß die Länge des mit dem Senkblei (6) verbundenen Wirbels (12) und des daran befestigten Vorfachs (8) einschließlich des Angelhakens (9) höchstens gleich der zweifachen Länge des Schwimmers, und falls ein über die Innenführung hinauskragender Stopfen (4) eingesetzt wird, höchstens gleich der zweifachen Länge des Schwimmers vermindert um die überkragende Länge des Stopfens ist.

EP 0 313 004 A2